# EUROPEAN PATENT APPLICATION

(11) **EP 3 597 502 A2**
(43) Date of publication of application: **22.01.2020**
(21) Application number: 19186529.4
(22) Date of filing: 16.07.2019
(51) Int. Cl.: B60W 30/182, B60W 50/14

(54) **VEHICLE CONTROL DEVICE**

(30) Priority: 16.07.2018 KR 20180082490
(71) Applicant: LG ELECTRONICS INC., Yeongdeungpo-Gu Seoul 07336 (KR)
(72) Inventor: CHOI, Heedong, 06772 Seoul (KR)
(74) Representative: Vossius & Partner Patentanwälte Rechtsanwälte mbB

(57) **Abstract**

The present invention relates to a vehicle control device mounted on a vehicle having a plurality of devices. The vehicle control device (800) includes a communication unit (810) configured to communicate with at least one of the devices; and a processor (830) configured to transmit an autonomous driving message to the at least one to perform autonomous driving in the vehicle, wherein the processor generates an autonomous driving message for controlling one or more autonomous driving functions based on an external message received from outside the vehicle.

## Description

### FIELD

The present disclosure relates to a vehicle control device mounted on a vehicle to perform communication with devices provided in the vehicle, and a vehicle including the same.

### BACKGROUND

A vehicle denotes a means of transporting people or goods using kinetic energy. Representative examples of vehicles include automobiles and motorcycles.

For safety and convenience of a user who uses the vehicle, various sensors and devices are provided in the vehicle, and the functions of the vehicle are diversified.

The function of the vehicle may be divided into a convenience function for promoting the convenience of a driver and a safety function for promoting the safety of a driver and/or a pedestrian.

First, the convenience function has a motive for development related to driver convenience, such as giving an infotainment (information + entertainment) function to the vehicle, supporting a partial autonomous driving function, or assisting the driver's vision such as night vision or blind spot. For example, the convenience function may include an active cruise control (ACC) function, a smart parking assist system (SPAS) function, a night vision (NV) function, a head up display (HUD) function, an around view monitor (AVM) function, and an adaptive headlight system (AHS) function, and the like.

The safety function is a technology for securing the safety of the driver and/or the safety of a pedestrian, and may include a lane departure warning system (LDWS) function, a lane keeping assist system (LKAS) function, an autonomous emergency braking (AEB) function, and the like.

A vehicle is provided with one or more displays for at least one passenger on board the vehicle, and as the functions of the vehicle become diverse, various driving information is provided through the displays. As a display changes from a device that simply conveys information to a device that communicates with a user, there is a need to develop a user interface capable of controlling the display in a vehicle.

In recent years, an autonomous driving vehicle that performs driving by itself without a driver has been developed. The autonomous driving vehicle must be able to provide various modes of autonomous driving according to a driving environment in which the vehicle is driving. This is because it is directly related to the safety and convenience of passengers.

### SUMMARY

The present disclosure is contrived to solve the foregoing problems and other problems. The present invention is defined by the independent claims. Dependent claims refer to preferred embodiments.

An object of the present disclosure is to provide a vehicle control device capable of providing autonomous driving optimized for various environments and a control method thereof.

Furthermore, an object of the present disclosure is to provide a vehicle control device capable of providing autonomous driving in a manner optimized for each environment to efficiently use resources provided in a vehicle and a control method thereof.

The present disclosure relates to a vehicle control device mounted on a vehicle having a plurality of devices.

The vehicle control device may include a communication unit configured to communicate with at least one of the devices; and a processor configured to transmit an autonomous driving message to the at least one to perform autonomous driving in the vehicle, wherein the processor generates an autonomous driving message for controlling one or more autonomous driving functions based on an external message received from outside the vehicle.

According to an embodiment, the processor may select any one of a plurality of autonomous driving levels based on the external message, and generate an autonomous driving message for at least one of the devices to perform autonomous driving corresponding to the selected level in the vehicle.

According to an embodiment, the one or more autonomous driving functions controlled by the processor may vary according to the selected level.

According to an embodiment, when a new external message is received while driving at any one of the levels, the processor may change the any one level to another one of the plurality of autonomous driving levels based on the new external message.

According to an embodiment, when the any one level is changed to the another level, the processor may set a variable section for changing to the another level, and control the communication unit to change a set value of at least one of the devices while the vehicle drives the variable section.

According to an embodiment, the variable section may vary according to at least one of the new external message and the speed of the vehicle.

According to an embodiment, the types of sensors used by the processor to generate an autonomous driving message may vary as autonomous driving corresponding to the selected level is performed.

According to an embodiment, the plurality of autonomous driving levels may include a first level for generating an autonomous driving message using sensors included in a first group, and the processor may control the communication unit to turn off at least one sensor not included in the first group when autonomous driving corresponding to the first level is performed.

According to an embodiment, the processor may deactivate the one or more autonomous driving functions not to execute the one or more autonomous driving functions based on an external message received from outside the vehicle.

According to an embodiment, the one or more autonomous driving functions deactivated according to the selected level may vary according to the selected level.

According to an embodiment, the processor may control the communication unit to turn off a device corresponding to the one or more autonomous driving functions as the one or more autonomous driving functions are deactivated.

According to an embodiment, the processor may change the priorities of the devices provided in the vehicle according to the selected level.

According to an embodiment, the processor may reassign a message ID assigned to each of the devices when changing the priorities of the plurality of devices.

According to an embodiment, the processor may activate the one or more autonomous driving functions to execute the one or more autonomous driving functions based on an external message received from outside the vehicle.

According to an embodiment, the processor may control the communication unit to display guide information for guiding the one or more autonomous driving functions to be controlled based on the external message in at least one of visual, auditory, and tactile manners.

According to an embodiment, the processor may determine a predetermined section in which the one or more autonomous driving functions should be controlled based on the external message, and execute the one or more autonomous driving functions while the vehicle is located in the predetermined section.

According to an embodiment, the guide information may include predetermined section guide information for guiding the predetermined section.

According to an embodiment, the processor may search for at least one autonomous driving function that does not meet a predetermined criterion among a plurality of autonomous driving functions based on vehicle driving information received through the communication unit, and controls the communication unit to output a warning message for warning that the searched autonomous drive function is not executed in another vehicle to the outside of the vehicle.

According to an embodiment, the processor may determine a predetermined section for restricting the execution of the searched autonomous driving function based on the vehicle driving information, and allow predetermined section information corresponding to the predetermined section to be included in the warning message so as not to execute the searched autonomous driving function in the another vehicle.

According to an embodiment, the warning message may include at least one of a generation time at which the warning message is generated, a valid time at which the warning message is valid, and an expiration time at which the validity of the warning message expires.

The present invention also relates to a vehicle control device for a vehicle, the vehicle control device comprising a communication unit configured to communicate with at least one of the plurality of devices of the vehicle; and at least one processor configured to based on an external message received from an external device outside of the vehicle, generate an autonomous driving message configured to control at least one autonomous driving function of the vehicle, and transmit the autonomous driving message to at least one of the plurality of devices included in the vehicle, the plurality of devices being configured to perform the at least one autonomous driving function of the vehicle.

Preferably, the at least one processor is further configured to select an autonomous driving level among a plurality of autonomous driving levels based on the external message.

Preferably, the at least one processor is further configured to generate the autonomous driving message to instruct the at least one of the plurality of devices to perform the at least one autonomous driving function corresponding to the selected autonomous driving level.

Preferably, the at least one autonomous driving function is configured to vary according to the selected autonomous driving level.

Preferably, the at least one processor is further configured to in response to reception of a new external message during autonomous driving of the vehicle at the selected autonomous driving level, determine another autonomous level among the plurality of autonomous driving levels based on the new external message.

Preferably, the at least one processor is further configured to set a transition range for changing the autonomous driving of the vehicle from the selected autonomous driving level to another autonomous driving level.

Preferably, the at least one processor is further configured to control the communication unit to change a set value of at least one of the plurality of devices of the vehicle corresponding to the transition range.

Preferably, the at least one processor is further configured to determine the transition range according to at least one of the new external message or a speed of the vehicle.

Preferably, the plurality of devices of the vehicle include a plurality of types of sensors.

Preferably, the at least one processor is further configured to use information from different types of sensors among the plurality of types of sensors to generate messages to autonomously drive the vehicle at different autonomous driving levels among the plurality of autonomous driving levels.

Preferably, the at least one processor is further configured to, based on reception of the external message, deactivate the at least one autonomous driving function.

Preferably, the at least one processor is further configured to determine at least one priority level of the plurality of devices of the vehicle based on the selected autonomous driving level.

Preferably, the at least one processor is further configured to change the at least one priority level of the plurality of devices of the vehicle by reassigning a message identification, ID, that has been assigned to each of the plurality of devices.

Preferably, the at least one processor is further configured to, based on reception of the external message, activate the at least one autonomous driving function to execute the at least one autonomous driving function.

Preferably, the at least one processor is further configured to, based on the external message, control the communication unit to display guide information that indicates the at least one autonomous driving function in at least one of visual, auditory, or tactile manners.

Preferably, the at least one processor is further configured to determine a predetermined range in which the at least one autonomous driving function are controlled based on the external message.

Preferably, the at least one processor is further configured to execute at least one autonomous driving function based on the vehicle being located in the predetermined range.

Preferably, the guide information comprises predetermined information indicating the predetermined range.

Preferably, the at least one processor is further configured to receive vehicle driving information through the communication unit.

Preferably, the at least one processor is further configured to, based on the vehicle driving information, search at least one autonomous driving function that does not satisfy a predetermined criterion.

Preferably, the at least one processor is further configured to control the communication unit to output a warning message indicating that the at least one autonomous driving function is not executed in another vehicle located outside of the vehicle.

Preferably, the at least one processor is further configured to determine a predetermined range in which the at least one autonomous driving function is restricted based on the vehicle driving information.

Preferably, the at least one processor is further configured to include, in the warning message, predetermined information corresponding to the predetermined range to cause another vehicle to not execute the at least one autonomous driving function.

Preferably, the warning message comprises at least one of a generation time at which the warning message is generated, a valid period for which the warning message is valid, or an expiration time at which validity of the warning message expires.

The present invention also relates to a method for controlling a vehicle using a vehicle control device according to any one of the aforementioned preferred embodiments. Preferably, the method steps are carried out by the aforementioned respective vehicle control device.

Furthermore, the present disclosure may be extended to a vehicle and/or a vehicle control method including the foregoing vehicle control device.

The effects of a vehicle control device and a vehicle including the same according to the present disclosure will be described as follows.

The vehicle may be provided with various modes (or an autonomous driving system), and the processor of the vehicle control device may selectively execute any one of the modes based on various information (or vehicle driving information) received through a communication unit.

The vehicle control device selects some of sensors provided in the vehicle based on a mode to be executed, and generates an autonomous driving message using the selected sensors in a restrictive manner. Since a sensor to be activated is varied according to a mode to be executed, the resources (in particular, the battery) of the vehicle may be efficiently used.

### BRIEF DESCRIPTION OF THE DRAWING

The accompanying drawings, which are included to provide a further understanding of the disclosure and are incorporated in and constitute a part of this specification, illustrate embodiments of the disclosure and together with the description serve to explain the principles of the disclosure.

In the drawings:
FIG. 1 is a view illustrating an appearance of a vehicle according to an embodiment of the present disclosure;
FIG. 2 is a view in which a vehicle according to an embodiment of the present disclosure is viewed at various angles from the outside;
FIGS. 3 and 4 are views illustrating an inside of a vehicle according to an embodiment of the present disclosure;
FIGS. 5 and 6 are views referenced to describe objects according to an embodiment of the present disclosure;
FIG. 7 is a block diagram referenced to describe a vehicle according to an embodiment of the present disclosure;
FIG. 8 is a conceptual view for explaining a vehicle control device according to an embodiment of the present disclosure;
FIG. 9 is a flowchart for explaining a control method of the vehicle control device of FIG. 8;
FIG. 10 is a flowchart for explaining a control method of a vehicle control device when a specific mode is executed;
FIGS. 11 and 12 are conceptual views for explaining an operation of a vehicle control device according to the execution of different modes;
FIGS. 13A and 13B are exemplary views for explaining a user interface provided by a vehicle control device according to the present disclosure;
FIG. 14 is a conceptual view for explaining an operation of a vehicle control device according to the reception of an external signal;
FIG. 15 is a block diagram for explaining a vehicle control device according to an embodiment of the present disclosure;
FIG. 16 is a flowchart for explaining a control method of a vehicle control device for adding a new mode or editing an existing mode;
FIG. 17 is a conceptual view for explaining an autonomous driving system including an autonomous driving device;
FIG. 18 is a flowchart for explaining an operation of an autonomous driving device in the autonomous driving system of FIG. 17;
FIG. 19 is a conceptual view for explaining an embodiment of autonomous driving levels;
FIG. 20 is a flowchart for explaining a method of setting a variable section in response to an external message; and
FIG. 21 is a flowchart for explaining a method of outputting a warning message in response to an external message.

### DETAILED DESCRIPTION

Hereinafter, the embodiments disclosed herein will be described in detail with reference to the accompanying drawings, and the same or similar elements are designated with the same numeral references regardless of the numerals in the drawings and their redundant description will be omitted. A suffix "module" and "unit" used for constituent elements disclosed in the following description is merely intended for easy description of the specification, and the suffix itself does not give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A vehicle according to an embodiment of the present disclosure may be understood as a conception including cars, motorcycles and the like. Hereinafter, the vehicle will be described based on a car.

The vehicle according to the embodiment of the present disclosure may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

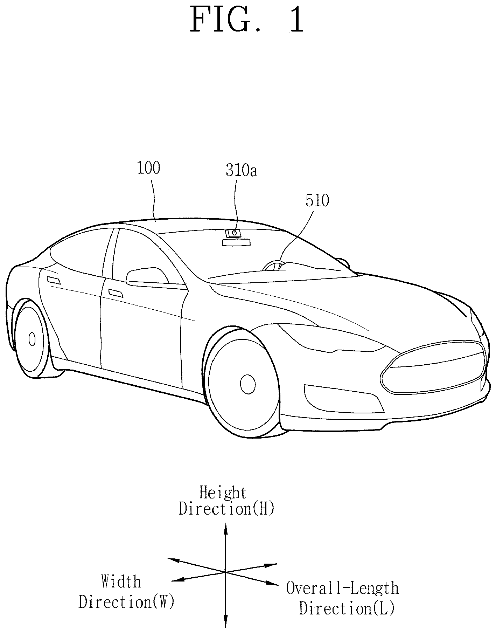

FIG. 1 is a view illustrating an appearance of a vehicle according to an embodiment of the present disclosure.

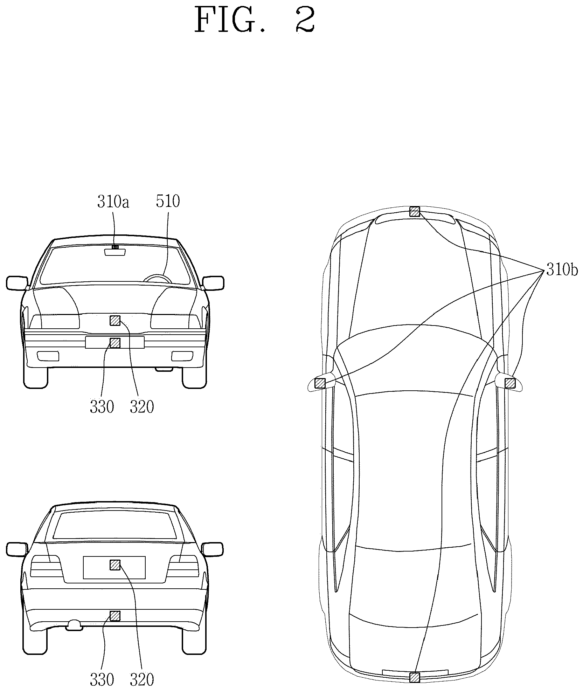

FIG. 2 is a view in which a vehicle according to an embodiment of the present disclosure is viewed at various angles from the outside.

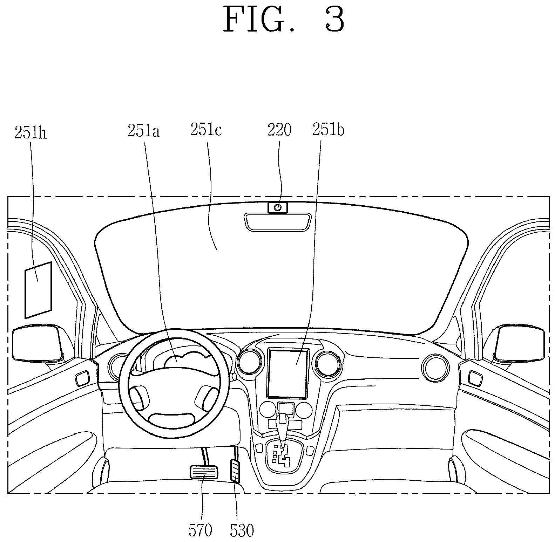

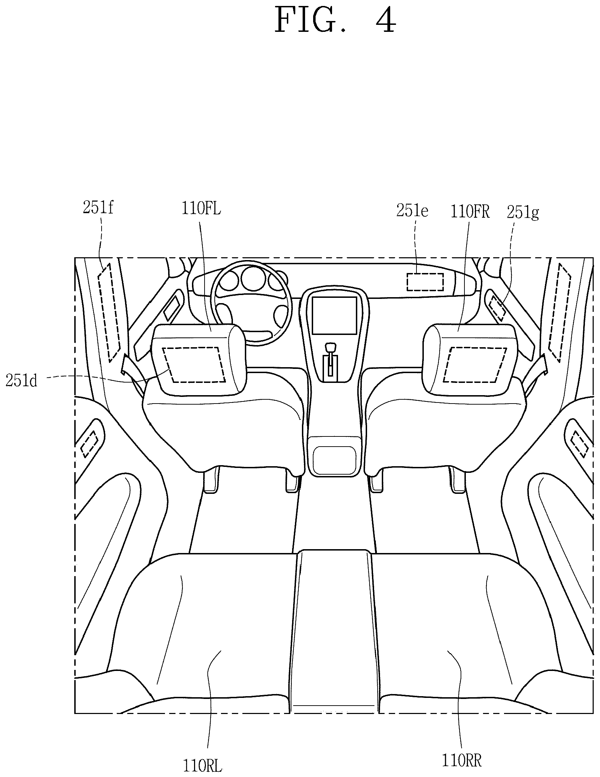

FIGS. 3 and 4 are views illustrating an inside of a vehicle according to an embodiment of the present disclosure.

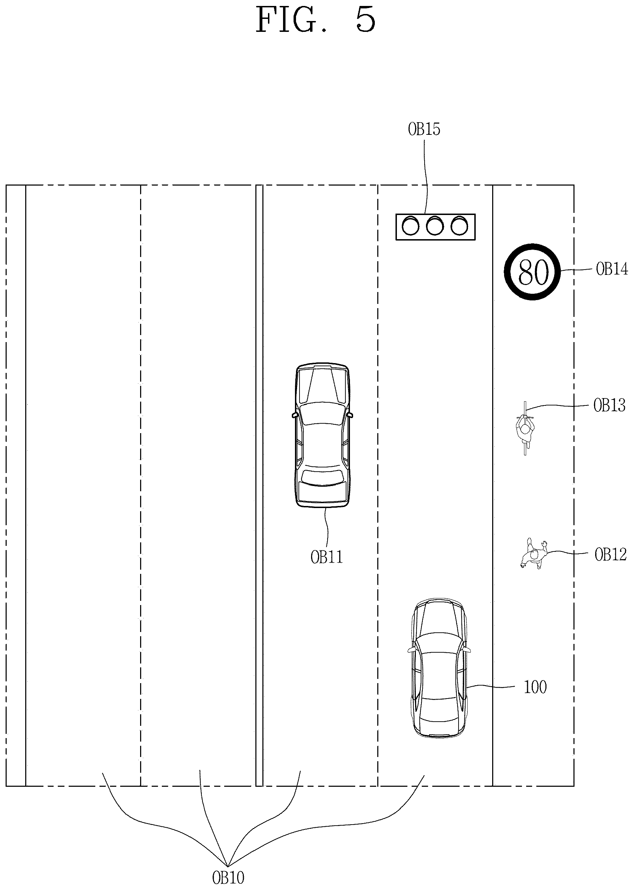

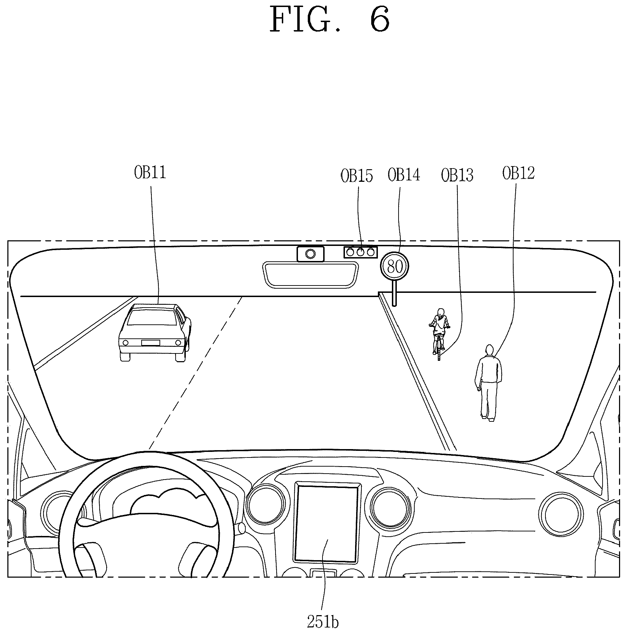

FIGS. 5 and 6 are views referenced to describe objects according to an embodiment of the present disclosure.

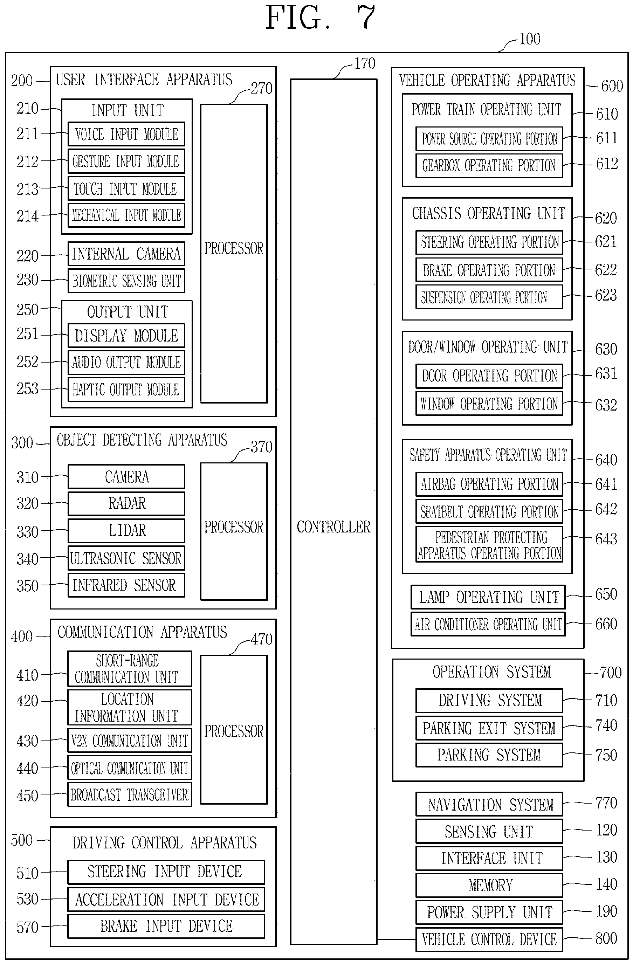

FIG. 7 is a block diagram referenced to describe a vehicle according to an embodiment of the present disclosure.

Referring to FIGS. 1 through 7, a vehicle 100 may include wheels turning by a driving force, and a steering apparatus 510 for adjusting a driving (ongoing, moving) direction of the vehicle 100.

The vehicle 100 may be an autonomous vehicle.

Here, autonomous driving is defined as controlling at least one of acceleration, deceleration, and driving direction based on a predetermined algorithm. In other words, it denotes that a driving operation device is automatically operated even if no user input is entered to the driving operation device.

The vehicle 100 may be switched into an autonomous mode or a manual mode based on a user input.

For example, the vehicle may be converted from the manual mode into the autonomous mode or from the autonomous mode into the manual mode based on a user input received through a user interface apparatus 200.

The vehicle 100 may be switched into the autonomous mode or the manual mode based on driving environment information. The driving environment information may be generated based on object information provided from an object detecting apparatus 300.

For example, the vehicle 100 may be switched from the manual mode into the autonomous mode or from the autonomous module into the manual mode based on driving environment information generated in the object detecting apparatus 300.

For example, the vehicle 100 may be switched from the manual mode into the autonomous mode or from the autonomous module into the manual mode based on driving environment information received through a communication apparatus 400.

The vehicle 100 may be switched from the manual mode into the autonomous mode or from the autonomous module into the manual mode based on information, data or signal provided from an external device.

When the vehicle 100 is driven in the autonomous mode, the autonomous vehicle 100 may be driven based on an operation system 700.

For example, the autonomous vehicle 100 may be driven based on information, data or signal generated in a driving system 710, a parking exit system 740 and a parking system 750.

When the vehicle 100 is driven in the manual mode, the autonomous vehicle 100 may receive a user input for driving through a driving control apparatus 500. The vehicle 100 may be driven based on the user input received through the driving control apparatus 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100.

As illustrated in FIG. 7, the vehicle 100 may include a user interface apparatus 200, an object detecting apparatus 300, a communication apparatus 400, a driving control apparatus 500, a vehicle operating apparatus 600, an operation system 700, a navigation system 770, a sensing unit 120, an interface unit 130, a memory 140, a controller 170 and a power supply unit 190.

According to embodiments, the vehicle 100 may include more components in addition to components to be explained in this specification or may not include some of those components to be explained in this specification.

The user interface apparatus 200 is an apparatus for communication between the vehicle 100 and a user. The user interface apparatus 200 may receive a user input and provide information generated in the vehicle 100 to the user. The vehicle 200 may implement user interfaces (Uls) or user experiences (UXs) through the user interface apparatus 200.

The user interface apparatus 200 may include an input unit 210, an internal camera 220, a biometric sensing unit 230, an output unit 250 and a processor 270.

According to embodiments, the user interface apparatus 200 may include more components in addition to components to be explained in this specification or may not include some of those components to be explained in this specification.

The input unit 200 may allow the user to input information. Data collected in the input unit 200 may be analyzed by the processor 270 and processed as a user's control command.

The input unit 210 may be disposed within the vehicle. For example, the input unit 200 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 210 may include a voice input module 211, a gesture input module 212, a touch input module 213, and a mechanical input module 214.

The audio input module 211 may convert a user's voice input into an electric signal. The converted electric signal may be provided to the processor 270 or the controller 170.

The voice input module 211 may include at least one microphone.

The gesture input module 212 may convert a user's gesture input into an electric signal. The converted electric signal may be provided to the processor 270 or the controller 170.

The gesture input module 212 may include at least one of an infrared sensor and an image sensor for detecting the user's gesture input.

According to embodiments, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method or a disparity method.

The touch input module 213 may convert the user's touch input into an electric signal. The converted electric signal may be provided to the processor 270 or the controller 170.

The touch input module 213 may include a touch sensor for detecting the user's touch input.

According to an embodiment, the touch input module 213 may be integrated with the display unit 251 so as to implement a touch screen. The touch screen may provide an input interface and an output interface between the vehicle 100 and the user.

The mechanical input module 214 may include at least one of a button, a dome switch, a jog wheel, and a jog switch. An electric signal generated by the mechanical input module 214 may be provided to the processor 270 or the controller 170.

The mechanical input module 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric sensing unit 230 may acquire the user's biometric information. The biometric sensing module 230 may include a sensor for detecting the user's biometric information and acquire fingerprint information and heart rate information regarding the user using the sensor. The biometric information may be used for user authentication.

The output unit 250 may generate an output related to a visual, audible or tactile signal.

The output unit 250 may include at least one of a display module 251, an audio output module 252 and a haptic output module 253.

The display module 251 may output graphic objects corresponding to various types of information.

The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window.

The transparent display may have a predetermined degree of transparency and output a predetermined screen thereon. The transparent display may include at least one of a transparent TFEL (Thin Film Electroluminescent), a transparent OLED (Organic Light-Emitting Diode), a transparent LCD (Liquid Crystal Display), a transmissive transparent display, and a transparent LED (Light Emitting Diode) display. The transparent display may have adjustable transparency.

Meanwhile, the user interface apparatus 200 may include a plurality of display modules 251 a to 251g.

The display module 251 may be disposed on one area of a steering wheel, one area 521a, 251b, 251e of an instrument panel, one area 251d of a seat, one area 251 f of each pillar, one area 251g of a door, one area of a center console, one area of a headlining or one area of a sun visor, or implemented on one area 251c of a windshield or one area 251h of a window.

The audio output module 252 converts an electric signal provided from the processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user can recognize such output.

The processor 270 may control an overall operation of each unit of the user interface apparatus 200.

According to an embodiment, the user interface apparatus 200 may include a plurality of processors 270 or may not include any processor 270.

When the processor 270 is not included in the user interface apparatus 200, the user interface apparatus 200 may operate according to a control of a processor of another apparatus within the vehicle 100 or the controller 170.

Meanwhile, the user interface apparatus 200 may be called as a display apparatus for vehicle.

The user interface apparatus 200 may operate according to the control of the controller 170.

The object detecting apparatus 300 is an apparatus for detecting an object located at outside of the vehicle 100.

The object may be a variety of objects associated with driving (operation) of the vehicle 100.

Referring to FIGS. 5 and 6, an object O may include a traffic lane OB10, another vehicle OB11, a pedestrian OB12, a two-wheeled vehicle OB13, traffic signals OB14 and OB15, light, a road, a structure, a speed hump, a geographical feature, an animal and the like.

The lane OB01 may be a driving lane, a lane next to the driving lane or a lane on which another vehicle comes in an opposite direction to the vehicle 100. The lanes OB10 may be a concept including left and right lines forming a lane.

The another vehicle OB11 may be a vehicle which is moving around the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located near the vehicle 100. The pedestrian OB12 may be a person located within a predetermined distance from the vehicle 100. For example, the pedestrian OB12 may be a person located on a sidewalk or roadway.

The two-wheeled vehicle OB13 may refer to a vehicle (transportation facility) that is located near the vehicle 100 and moves using two wheels. The two-wheeled vehicle OB13 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

The light may be light emitted from a lamp provided on another vehicle. The light may be light generated from a streetlamp. The light may be solar light.

The road may include a road surface, a curve, an upward slope, a downward slope and the like.

The structure may be an object that is located near a road and fixed on the ground. For example, the structure may include a streetlamp, a roadside tree, a building, an electric pole, a traffic light, a bridge and the like.

The geographical feature may include a mountain, a hill and the like.

Meanwhile, objects may be classified into a moving object and a fixed object. For example, the moving object may be a concept including another vehicle and a pedestrian. The fixed object may be a concept including a traffic signal, a road and a structure.

The object detecting apparatus 300 may include a camera 310, a radar 320, a lidar 330, an ultrasonic sensor 340, an infrared sensor 350 and a processor 370.

According to an embodiment, the object detecting apparatus 300 may further include other components in addition to the components described, or may not include some of the components described.

The camera 310 may be located on an appropriate portion outside the vehicle to acquire an external image of the vehicle. The camera 310 may be a mono camera, a stereo camera 310a, an AVM (Around View Monitoring) camera 310b, or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk or a tail gate.

For example, the camera 310 may be disposed adjacent to at least one of side windows within the vehicle to acquire a side image of the vehicle. Or, the camera 310 may be disposed adjacent to a side mirror, a fender or a door.

The camera 310 may provide an acquired image to the processor 370.

The radar 320 may include electric wave transmitting and receiving portions. The radar 320 may be implemented as a pulse radar or a continuous wave radar according to a principle of emitting electric waves. The radar 320 may be implemented by a Frequency Modulated Continuous Wave (FMCW) scheme or a Frequency Shift Keying (FSK) scheme according to a signal waveform in a continuous wave radar scheme.

The radar 320 may detect an object in a time of flight (TOF) manner or a phase-shift manner through the medium of electromagnetic waves, and detect a position of the detected object, a distance from the detected object and a relative speed with the detected object.

The radar 320 may be disposed on an appropriate position outside the vehicle for detecting an object which is located at a front, rear or side of the vehicle.

The lidar 330 may include laser transmitting and receiving portions. The lidar 330 may be implemented in a time of flight (TOF) manner or a phase-shift manner.

The lidar 330 may be implemented as a drive type or a non-drive type.

For the drive type, the lidar 330 may be rotated by a motor and detect object near the vehicle 100.

For the non-drive type, the lidar 330 may detect, through light steering, objects which are located within a predetermined range based on the vehicle 100. The vehicle 100 may include a plurality of non-drive type lidars 330.

The lidar 330 may detect an object in a time of flight (TOF) manner or a phase-shift manner through the medium of laser light, and detect a position of the detected object, a distance from the detected object and a relative speed with the detected object.

The lidar 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected object.

The infrared sensor 350 may be disposed on an appropriate position outside the vehicle for detecting an object located at the front, rear or side of the vehicle.

The processor 370 may control an overall operation of each unit of the object detecting apparatus 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave which an emitted electromagnetic wave is reflected from the object, and track the object. The processor 370 may execute operations, such as a calculation of a distance from the object, a calculation of a relative speed with the object and the like, based on the electromagnetic wave.

The processor 370 may detect an object based on a reflected laser beam which an emitted laser beam is reflected from the object, and track the object. The processor 370 may execute operations, such as a calculation of a distance from the object, a calculation of a relative speed with the object and the like, based on the laser beam.

The processor 370 may detect an object based on a reflected ultrasonic wave which an emitted ultrasonic wave is reflected from the object, and track the object. The processor 370 may execute operations, such as a calculation of a distance from the object, a calculation of a relative speed with the object and the like, based on the ultrasonic wave.

The processor 370 may detect an object based on reflected infrared light which emitted infrared light is reflected from the object, and track the object. The processor 370 may execute operations, such as a calculation of a distance from the object, a calculation of a relative speed with the object and the like, based on the infrared light.

According to an embodiment, the object detecting apparatus 300 may include a plurality of processors 370 or may not include any processor 370. For example, each of the camera 310, the radar 320, the lidar 330, the ultrasonic sensor 340 and the infrared sensor 350 may include the processor in an individual manner.

When the processor 370 is not included in the object detecting apparatus 300, the object detecting apparatus 300 may operate according to the control of a processor of an apparatus within the vehicle 100 or the controller 170.

The object detecting apparatus 300 may operate according to the control of the controller 170.

The communication apparatus 400 is an apparatus for performing communication with an external device. Here, the external device may be another vehicle, a mobile terminal or a server. The communication device 400 may be referred to as a "wireless communication unit".

The communication apparatus 400 may perform the communication by including at least one of a transmitting antenna, a receiving antenna, and radio frequency (RF) circuit and RF device for implementing various communication protocols.

The communication apparatus 400 may include a short-range communication unit 410, a location information unit 420, a V2X communication unit 430, an optical communication unit 440, a broadcast transceiver 450 and a processor 470.

According to an embodiment, the communication apparatus 400 may further include other components in addition to the components described, or may not include some of the components described.

The short-range communication unit 410 is a unit for facilitating short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communications with a server (Vehicle to Infra; V2l), another vehicle (Vehicle to Vehicle; V2V), or a pedestrian (Vehicle to Pedestrian; V2P). The V2X communication unit 430 may include an RF circuit implementing a communication protocol with the infra (V2l), a communication protocol between the vehicles (V2V) and a communication protocol with a pedestrian (V2P).

The optical communication unit 440 is a unit for performing communication with an external device through the medium of light. The optical communication unit 440 may include a light-emitting diode for converting an electric signal into an optical signal and sending the optical signal to the exterior, and a photodiode for converting the received optical signal into an electric signal.

According to an embodiment, the light-emitting diode may be integrated with lamps provided on the vehicle 100.

The broadcast transceiver 450 is a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal and a data broadcast signal.

The processor 470 may control an overall operation of each unit of the communication apparatus 400.

According to an embodiment, the communication apparatus 400 may include a plurality of processors 470 or may not include any processor 470.

When the processor 470 is not included in the communication apparatus 400, the communication apparatus 400 may operate according to the control of a processor of another device within the vehicle 100 or the controller 170.

Meanwhile, the communication apparatus 400 may implement a display apparatus for a vehicle together with the user interface apparatus 200. In this instance, the display apparatus for the vehicle may be referred to as a telematics apparatus or an Audio Video Navigation (AVN) apparatus.

The communication apparatus 400 may operate according to the control of the controller 170.

The driving control apparatus 500 is an apparatus for receiving a user input for driving.

In a manual mode, the vehicle 100 may be operated based on a signal provided by the driving control apparatus 500.

The driving control apparatus 500 may include a steering input device 510, an acceleration input device 530 and a brake input device 570.

The steering input device 510 may receive an input regarding a driving (ongoing) direction of the vehicle 100 from the user. The steering input device 510 is preferably configured in the form of a wheel allowing a steering input in a rotating manner. According to some embodiments, the steering input device may also be configured in a shape of a touch screen, a touchpad or a button.

The acceleration input device 530 may receive an input for accelerating the vehicle 100 from the user. The brake input device 570 may receive an input for braking the vehicle 100 from the user. Each of the acceleration input device 530 and the brake input device 570 is preferably configured in the form of a pedal. According to some embodiments, the acceleration input device or the brake input device may also be configured in a shape of a touch screen, a touch pad or a button.

The driving control apparatus 500 may operate according to the control of the controller 170.

The vehicle operating apparatus 600 is an apparatus for electrically controlling operations of various devices within the vehicle 100.

The vehicle operating apparatus 600 may include a power train operating unit 610, a chassis operating unit 620, a door/window operating unit 630, a safety apparatus operating unit 640, a lamp operating unit 650, and an air-conditioner operating unit 660.

According to embodiments, the vehicle operating apparatus 600 may further include other components in addition to the components described, or may not include some of the components described.

Meanwhile, the vehicle operating apparatus 600 may include a processor. Each unit of the vehicle operating apparatus 600 may individually include a processor.

The power train operating unit 610 may control an operation of a power train device.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque and the like of the motor according to the control of the controller 170.

The gearbox operating portion 612 may perform a control for a gearbox.

The gearbox operating portion 612 may adjust a state of the gearbox. The gearbox operating portion 612 may change the state of the gearbox into drive (forward) (D), reverse (R), neutral (N) or parking (P).

Meanwhile, when an engine is the power source, the gearbox operating portion 612 may adjust a locked state of a gear in the drive (D) state.

The chassis operating unit 620 may control an operation of a chassis device.

The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road.

Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protecting apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protecting apparatus operating portion 643 may perform an electronic control for a hood lift and a pedestrian airbag. For example, the pedestrian protecting apparatus operating portion 643 may control the hood lift and the pedestrian airbag to be open up upon detecting pedestrian collision.

The lamp operating portion 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operating apparatus 600 may include a processor. Each unit of the vehicle operating apparatus 600 may individually include a processor.

The vehicle operating apparatus 600 may operate according to the control of the controller 170.

The operation system 700 is a system that controls various driving modes of the vehicle 100. The operation system 700 may be operated in the autonomous driving mode.

The operation system 700 may include a driving system 710, a parking exit system 740 and a parking system 750.

According to embodiments, the operation system 700 may further include other components in addition to components to be described, or may not include some of the components to be described.

Meanwhile, the operation system 700 may include a processor. Each unit of the operation system 700 may individually include a processor.

Meanwhile, according to embodiments, the operation system may be a sub concept of the controller 170 when it is implemented in a software configuration.

Meanwhile, according to embodiment, the operation system 700 may be a concept including at least one of the user interface apparatus 200, the object detecting apparatus 300, the communication apparatus 400, the vehicle operating apparatus 600 and the controller 170.

The driving system 710 may perform driving of the vehicle 100.

The driving system 710 may receive navigation information from a navigation system 770, transmit a control signal to the vehicle operating apparatus 600, and perform driving of the vehicle 100.

The driving system 710 may receive object information from the object detecting apparatus 300, transmit a control signal to the vehicle operating apparatus 600 and perform driving of the vehicle 100.

The driving system 710 may receive a signal from an external device through the communication apparatus 400, transmit a control signal to the vehicle operating apparatus 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot.

The parking exit system 740 may receive object information from the object detecting apparatus 300, transmit a control signal to the vehicle operating apparatus 600 and perform the exit of the vehicle 100 from the parking lot.

The parking exit system 740 may receive a signal from an external device through the communication apparatus 400, transmit a control signal to the vehicle operating apparatus 600, and perform the exit of the vehicle 100 from the parking lot.

The parking system 750 may perform parking of the vehicle 100.

The parking system 750 may receive navigation information from the navigation system 770, transmit a control signal to the vehicle operating apparatus 600, and park the vehicle 100.

The parking system 750 may receive object information from the object detecting apparatus 300, transmit a control signal to the vehicle operating apparatus 600 and park the vehicle 100.

The parking system 750 may receive a signal from an external device through the communication apparatus 400, transmit a control signal to the vehicle operating apparatus 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

According to embodiments, the navigation system 770 may update prestored information by receiving information from an external device through the communication apparatus 400.

According to embodiments, the navigation system 770 may be classified as a sub component of the user interface apparatus 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the interface unit 130 may exchange data with the mobile terminal.

Meanwhile, the interface unit 130 may serve as a path for supplying electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be various storage apparatuses such as a ROM, a RAM, an EPROM, a flash drive, a hard drive, and the like in terms of hardware. The memory 140 may store various data for overall operations of the vehicle 100, such as programs for processing or controlling the controller 170.

According to embodiments, the memory 140 may be integrated with the controller 170 or implemented as a sub component of the controller 170.

The controller 170 may control an overall operation of each unit of the vehicle 100. The controller 170 may be referred to as an Electronic Control Unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

Hereinafter, a vehicle control device 800 provided in the vehicle 100 will be described in detail.

The vehicle control device 800 is provided in the vehicle 100, and may be an independent device that can be attached to or detached from the vehicle 100, or may be a part the components of the vehicle 100 integrally installed into the vehicle 100.

Hereinafter, for the sake of convenience of explanation, the vehicle control device 800 will be described as a separate component that is independently formed from the controller 170 of the vehicle 100. However, this is only an embodiment of the present disclosure, and all the operation and control method of the vehicle control device 800 described herein may be carried out by the controller 170 of the vehicle 100. In other words, the operation and/or control method performed by the processor 830 of the vehicle control device 800 may also be performed by the controller 170 of the vehicle 100.

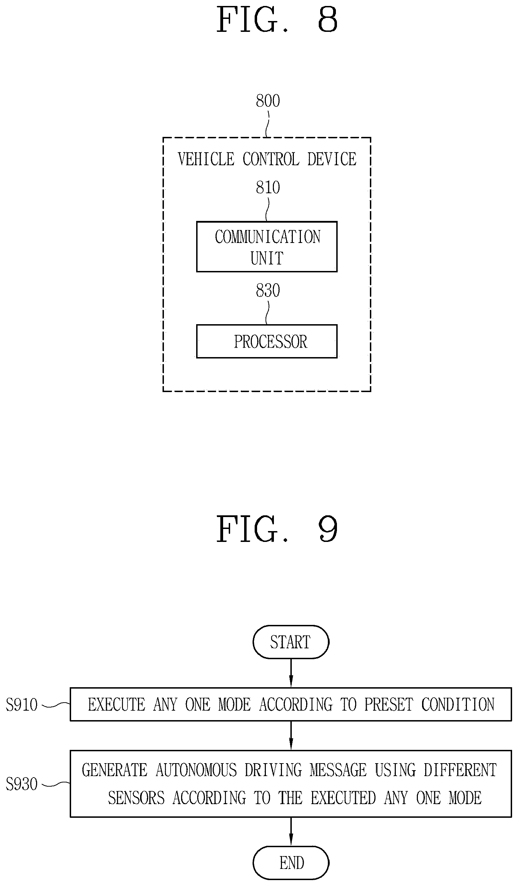

FIG. 8 is a conceptual view for explaining a vehicle control device according to an embodiment of the present disclosure.

Referring to FIG. 8, the vehicle control device 800 includes a communication unit 810 and a processor 830.

The communication unit 810 is configured to perform communication with the various components described in FIG. 7. For an example, the communication unit 810 may receive various information provided through a controller area network (CAN). In another example, the communication unit 810 may perform communication with all communicable devices, such as a vehicle, a mobile terminal and a server, and other vehicles. This may be named V2X (Vehicle to everything) communication. V2X communication may be defined as a technology that exchanges information such as traffic situation while communicating with road infrastructure and other vehicles while driving.

The communication unit 810 is configured to communicate with one or more devices provided in the vehicle 100.

Moreover, the communication unit 810 may receive information related to the driving of the vehicle from most of the devices provided in the vehicle 100. The information transmitted from the vehicle 100 to the vehicle control device 800 is referred to as "vehicle driving information."

The vehicle driving information includes vehicle information and surrounding information of the vehicle. The information related to the inside of the vehicle with respect to the frame of the vehicle 100 may be defined as vehicle information, and the information related with the outside of the vehicle may be defined as surrounding information.

Vehicle information denotes information on the vehicle itself. For example, the vehicle information may include at least one of a driving speed of the vehicle, a driving direction, an acceleration, an angular speed, a position (GPS), a weight, a number of vehicle occupants, a braking force of the vehicle, a maximum braking force of the vehicle, an air pressure of each wheel, a centrifugal force applied to the vehicle, a driving mode of the vehicle (whether it is an autonomous driving mode or a manual driving mode), a parking mode of the vehicle (autonomous parking mode, automatic parking mode, manual parking mode), whether or not a user is on board the vehicle, information related to the user, and the like.

The surrounding information denotes information relate to another object located within a predetermined range around the vehicle and information related to the outside of the vehicle. The surrounding information of the vehicle may be a state of road surface (frictional force) on which the vehicle is traveling, weather, a distance from a front-side (rear-side) vehicle, a relative speed of a front-side (rear-side) vehicle, a curvature of curve when a driving lane is the curve, an ambient brightness of the vehicle, information associated with an object existing in a reference region (predetermined region) based on the vehicle, whether or not an object enters (or leaves) the predetermined region, whether or not a user exists around the vehicle, and information associated with the user (for example, whether or not the user is an authenticated user), and the like.

In addition, the surrounding information may include an ambient brightness, a temperature, a sun position, surrounding object information (a person, a vehicle, a sign, etc.), a type of road surface during driving, a geographic feature, line information, driving lane Information, and information required for autonomous driving/autonomous parking/automatic parking/manual parking mode.

Furthermore, the surrounding information may further include a distance from an object existing around the vehicle to the vehicle 100, a collision probability, a type of the object, a parking space for the vehicle, an object for identifying the parking space (for example, a parking line, a string, another vehicle, a wall, etc.), and the like.

The vehicle driving information is not limited to the example described above and may include all information generated from the components provided in the vehicle 100.

Meanwhile, the processor 830 is configured to control one or more devices provided in the vehicle 100 using the communication unit 810.

Specifically, the processor 830 may determine whether at least one of a plurality of preset conditions is satisfied based on vehicle driving information received through the communication unit 810. Depending on the satisfied conditions, the processor 830 may control the one or more displays in different ways.

In connection with the preset condition, the processor 830 may sense the occurrence of an event in an electronic unit and/or application provided in the vehicle 100 and determine whether the sensed event satisfies the preset condition. At this time, the processor 830 may detect the occurrence of an event from information received through the communication unit 810.

The application is a concept including a widget, a home launcher, and the like, and refers to all types of programs that can be driven on the vehicle 100. Accordingly, the application may be a program that performs a function of web browser, video playback, message transmission/reception, schedule management, and application update.

In addition, the application may include forward collision warning (FCW), blind spot detection (BSD), lane departure warning (LDW), pedestrian detection (PD), curve speed warning (CSW), and turn-by-turn navigation (TBT).

For example, an event may occur when there is a missed call, when there is an application to be updated, when a message arrives, start on, start off, autonomous driving on/off, LCD awake key, alarm, incoming call, missed notification, or the like.

For another example, an event may occur when a warning set by an advanced driver assistance system (ADAS) occurs or a function set by the ADAS is performed. For example, when a forward collision warning occurs, when a blind spot detection occurs, when a lane departure warning occurs, when a lane keeping assist warning occurs, when autonomous emergency braking function is performed, or the like may be seen as an occurrence of an event.

For another example, when changed from a forward gear to a reverse gear, when an acceleration greater than a predetermined value is generated, when a deceleration greater than a predetermined value is generated, when a power device is changed from an internal combustion engine to a motor, when changed from the motor to the internal combustion engine, or the like may also be seen as an occurrence of an event.

In addition, when various ECUs provided in the vehicle 100 perform a specific function may also be seen as an occurrence of an event.

When the occurred event satisfies a preset condition, the processor 830 controls the communication unit 810 to display information corresponding to the satisfied condition on the one or more displays.

The processor 830 may transmit an autonomous driving message to at least one of a plurality of devices provided in the vehicle 100 to perform autonomous driving in the vehicle 100. For example, an autonomous driving message may be transmitted to a brake to perform deceleration or a steering device to change the driving direction.

Hereinafter, the operation of the vehicle control device 800 will be described in more detail with reference to the accompanying drawings.

FIG. 9 is a flowchart for explaining a control method of the vehicle control device of FIG. 8.

First, the processor 830 performs communication with a plurality of sensors provided in the vehicle 100, and executes any one mode according to a preset condition (S910).

Here, the mode denotes an autonomous driving mode in which an autonomous driving message is generated using limited sensors. Specifically, when any one mode is executed, the processor 830 generates an autonomous driving message in a limited manner using predetermined sensors but not using sensors other than the predetermined sensors.

For example, the autonomous driving mode may include a first mode for generating an autonomous driving message using sensors included in a first group and a second mode for generating an autonomous driving message using sensors included in a second group. At this time, at least one of the sensors included in the first group may be different from the sensors included in the second group.

The preset condition may relate to at least one of a user input, a position of the vehicle 100, a driving direction of the vehicle 100, a destination set in the vehicle 100, a characteristic of a road on which the vehicle 100 is driving, and a remaining amount of a battery provided in the vehicle 100.

A predetermined condition, an autonomous driving mode corresponding to the predetermined condition, and information on sensors to be used during the execution of the predetermined autonomous driving mode may be stored in the memory of the vehicle 100.

The processor 830 generates an autonomous driving message using different sensors according to any one of the executed modes (S930). The generated autonomous driving message is transmitted to various devices provided in the vehicle 100 through the communication unit 810.

As the any one mode is executed, the types of sensors used by the processor 830 to generate an autonomous driving message vary.

For example, an urban mode may be executed when the vehicle 100 is driving in an urban area, and a highway mode may be executed when driving a highway. At this time, the vehicle 100 performs an optimum autonomous driving as a sensor being activated in an urban mode and a sensor being activated in a highway mode vary.

For another example, when a battery remaining amount of the vehicle 100 is less than a reference value, a power saving mode may be performed to perform autonomous driving using the minimum number of sensors.

When the first mode is switched to the second mode, the processor 830 may generate an autonomous driving command using sensors included in the second group instead of the sensors included in the first group.

The vehicle control device 800 may use a different hardware area according to the autonomous driving mode executed among a plurality of autonomous driving modes (or a plurality of autonomous driving systems). Furthermore, the control priority for the hardware area may be changed according to whether or not system switching/specific mode is executed.

Here, the hardware area includes a sensor used by the processor 830 to generate an autonomous driving message, and an actuator controlled (or subject to an autonomous driving message) to actually carry out autonomous driving.

Since the hardware area controlled by the executed autonomous driving mode is variable, it may be possible to improve autonomous driving performance, and efficiently use given resources.

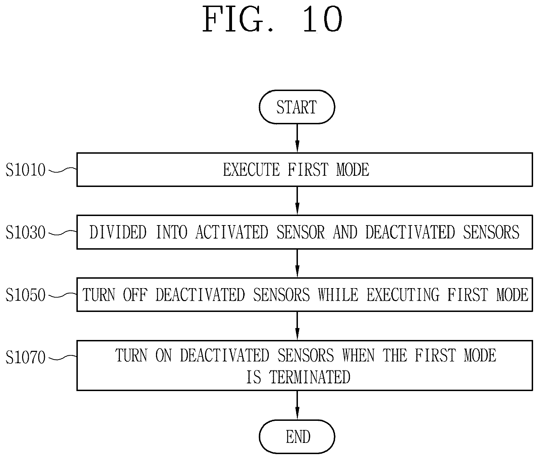

FIG. 10 is a flowchart for explaining a control method of a vehicle control device when a specific mode is executed.

The processor 830 may execute any one of the plurality of modes or switch any one mode being executed into another mode according to a preset condition. It may also be possible to switch autonomous driving to manual running while ending any one mode being executed.

Meanwhile, the processor 830 may execute a first mode among the plurality of modes (S1010). Furthermore, sensors provided in the vehicle 100 are classified into activated sensors and deactivated sensors (S1030).

Sensors included in the first group corresponding to the first mode are defined as activated sensors, and sensors not included in the first group are defined as deactivated sensors. In other words, the sensors included in the vehicle 100 may be classified as an activation sensor and a deactivation sensor.

The processor 830 generates an autonomous driving message using information received from the activated sensor other than the deactivated sensor, while the first mode is being executed.

The processor 830 may control the communication unit 810 to turn off the inactivated sensor while the first mode is being executed (S1050). In addition, when the first mode is ended, the communication unit 810 may be controlled to turn on the deactivated sensor again (S1070).

As the preset mode is executed, the battery of the vehicle 100 may be efficiently used since the sensors specific to the preset mode are used in a restrictively activated manner.

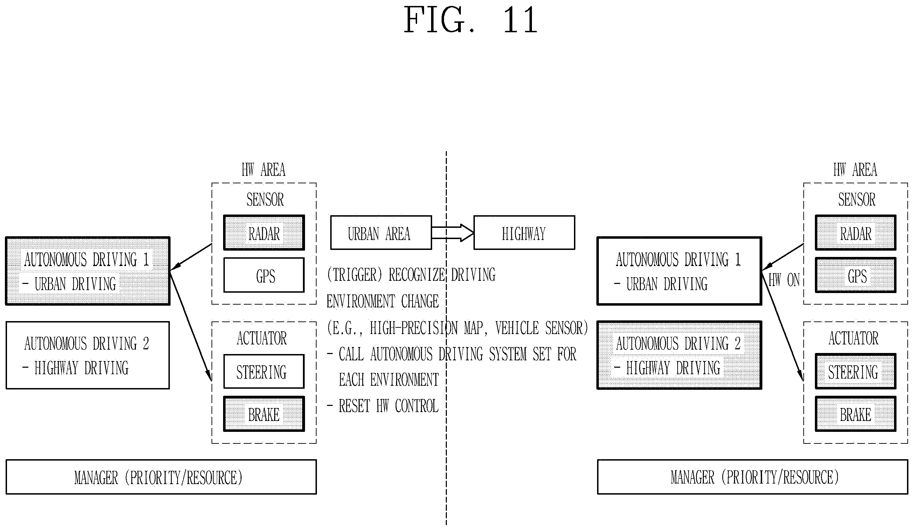

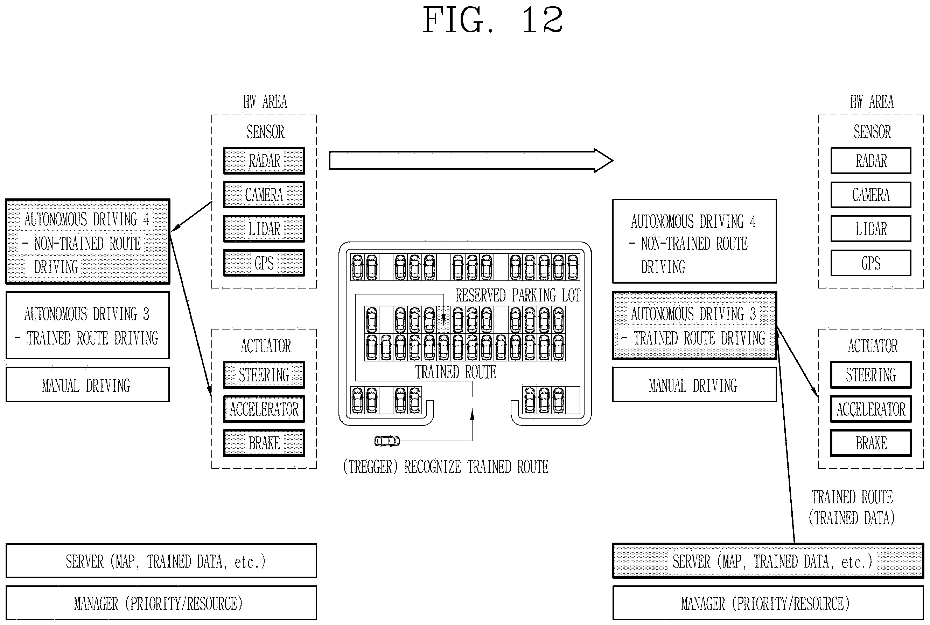

FIGS. 11 and 12 are conceptual views for explaining an operation of a vehicle control device according to the execution of different modes.

Referring to FIG. 11, the processor 830 may execute a first autonomous driving mode (autonomous driving 1 or urban driving) made to be suitable for urban driving, and a second autonomous driving mode (autonomous driving 2 or highway driving) made to be suitable for highway driving. Specifically, the processor 830 may execute any one mode based on the position of the vehicle 100 and/or the characteristics of a road on which the vehicle 100 is driving.

An error of the GPS information in the urban area increases. This is because signals transmitted from satellites generate inaccurate location information while being irregularly reflected by buildings located in downtown. In this case, the processor 830 executes the first autonomous mode, activates the ladder set in the first autonomous mode, and deactivates the GPS not set in the first autonomous mode have.

When the vehicle 100 enters a highway, the processor 830 may end the first autonomous mode and execute the second autonomous mode. The processor 830 may activate the GPS which has been inactivated to perform autonomous driving suitable for high-speed driving. The processor 830 generates an autonomous driving message using the lidar and the GPS.

Depending on the mode being executed as well as the sensor, the hardware area that can be controlled by the vehicle control device 800 may vary. For example, the processor 830 may generate an autonomous driving message for a brake in the first autonomous mode, but generate an autonomous driving message for at least one of a brake and a steering wheel in the second autonomous mode. As the number of usable sensors increases, a safe area capable of performing autonomous driving increases, and the accuracy of the safety area increases.

On the other hand, an autonomous driving route capable of performing autonomous driving from a first point to a second point, which is generated in the memory of the vehicle 100 through training, may be stored or the autonomous driving route may be received from an external device such as a server. In this case, the processor may execute any one mode according to whether or not to generate an autonomous driving message according to the autonomous driving route.

Specifically, the processor 830 may execute the first mode when the autonomous driving route can be used, and may execute the second mode when the autonomous driving route cannot be used.

When it is possible to generate an autonomous driving message according to the autonomous driving route, the processor 830 may perform a trained autonomous driving mode (or trained route driving) and generate an autonomous driving message in a restrictive manner using sensors defined in the trained autonomous driving mode.

In the case of the trained autonomous driving mode, autonomous driving is carried out in accordance with the autonomous driving route stored in the memory. At this time, the processor 830 may determine whether or not update is required for the autonomous driving route, and may execute a trained autonomous driving update mode when update is required. In other words, when the update of the autonomous driving route is required while generating an autonomous driving message using sensors included in the first group according to the execution of the first mode, the processor 830 may switch the first mode to the second mode.

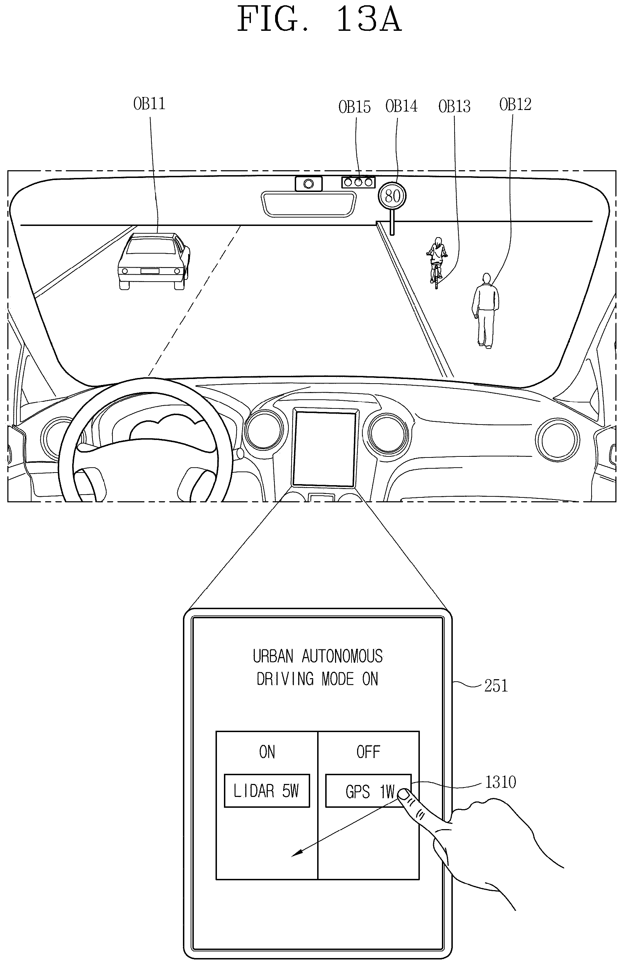

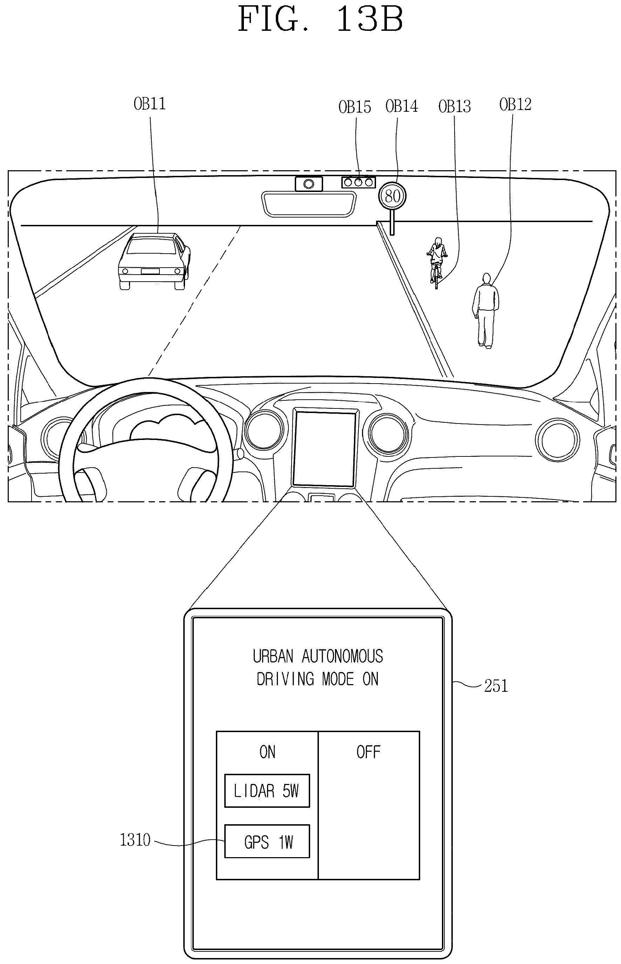

FIGS. 13A and 13B are exemplary views for explaining a user interface provided by a vehicle control device according to the present disclosure.

As the any one mode is executed, the processor 830 may output guide information for guiding the any one mode in at least one of visual, auditory, and tactile modes. The processor 830 controls the communication unit 810 to output the guide information through various output devices provided in the vehicle 100.

Moreover, as the any one mode is executed, the processor 830 may control the communication unit 810 to display at least one of activated sensor information for guiding activated sensors and deactivated sensor information for guiding deactivated sensors on the display 251 of the vehicle 100.

For example, as illustrated in FIG. 13A, when the urban autonomous navigation mode is executed, the activated sensor may include a lidar and the deactivated sensor may include a GPS. In this case, at least one of the activated sensor information including the lidar, and the deactivated sensor information including the GPS may be displayed.

The activated sensor information and/or the deactivated sensor information may include power amount information for guiding the amount of power consumed per unit time by the any one sensor when the any one sensor is used to generate an autonomous driving message. For example, as illustrated in FIG. 13A, the user may check that 5W is used in the case of lidar, and 1W is used in the case of the GPS, through the power amount information.

On the other hand, the user may select activated sensors to be activated or deactivated sensors to be deactivated while performing autonomous driving. More specifically, activated sensors included in a predetermined mode and deactivated sensors not included in the predetermined mode may be edited.

The display 251 may be configured with a touch screen, and a touch input for dragging and dropping any one graphic object may be received. In this case, the processor 830 may update any one of the activated sensors with a deactivated sensor, or update any one of the deactivated sensors with an activated sensor. In other words, the processor 830 may add, delete, and/or edit any one sensor not included in the first group with respect to the first group based on a user input.

For example, as illustrated in FIG. 13A, the display 251 may include an activated sensor region in which activated sensors are disposed and a deactivated sensor region in which deactivated sensors are disposed. When a touch input for dragging and dropping a GPS graphic object 1310 corresponding to the deactivated sensor to the activated sensor region is received, the GPS is switched from the deactivated sensor to the activated sensor as illustrated in FIG. 13B. In other words, when an urban autonomous navigation mode is executed, the processor 830 generates an autonomous driving message using the GPS and the lidar.

The user may edit various autonomous driving modes according to his/her preference while visually checking the battery consumption amount.

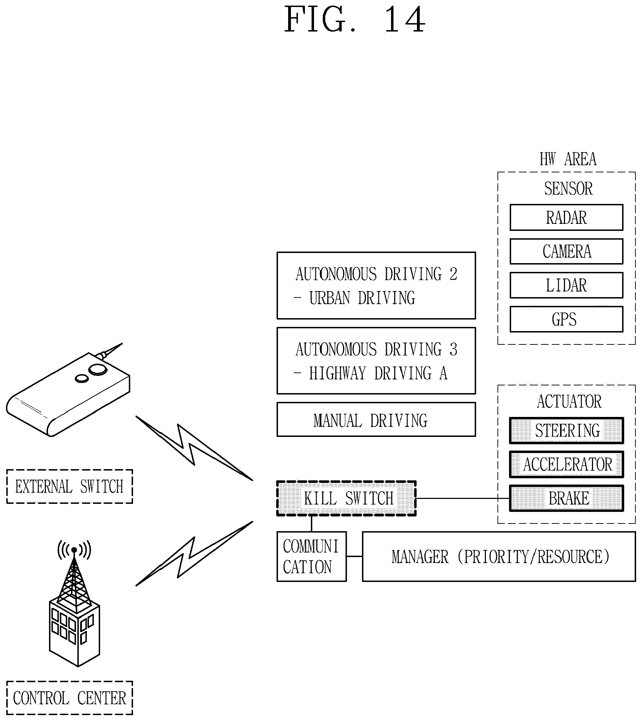

FIG. 14 is a conceptual view for explaining an operation of a vehicle control device according to the reception of an external signal.

It is required to forcibly stop the vehicle 100 at an outside or move the vehicle 100 to a predetermined place such as a police station when an abnormal situation occurs during autonomous driving or the vehicle 100 is stolen.

For this purpose, the vehicle control device 800 may execute an emergency autonomous driving mode based on a wireless signal received from an external switch and/or a server located outside the vehicle 100.

In this case, a break may be assigned the highest priority among the hardware areas controlled by the vehicle control device 800. Even when a control command for controlling a hardware area is generated from a device other than the vehicle control device 800, an autonomous driving message generated by the vehicle control device 800 may be regarded as the highest priority.

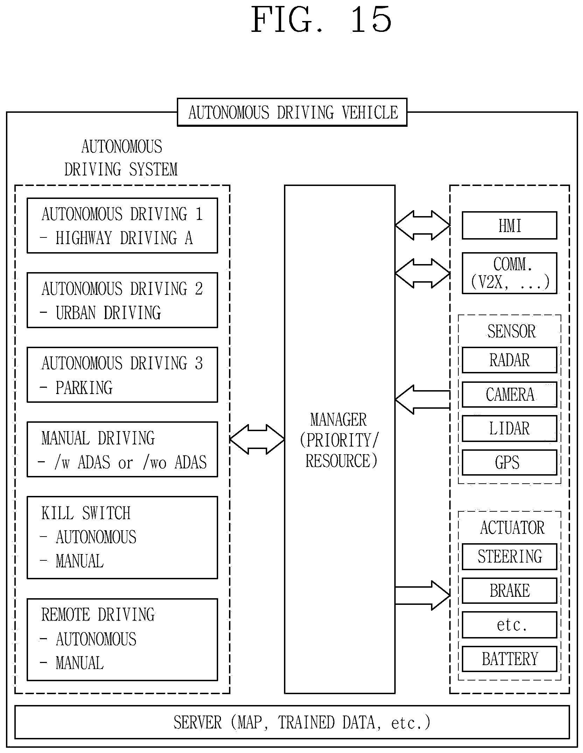

FIG. 15 is a block diagram for explaining a vehicle control device according to an embodiment of the present disclosure.

Various modes (or autonomous driving system) may be provided in the vehicle 100, and the processor 830 of the vehicle control device 800 may selectively execute any one of the modes based on various information (or vehicle driving information) received through the communication unit 810.

The modes are related to an autonomous driving mode in which the vehicle 100 carries out a driving direction, acceleration and deceleration by means of software, and denote states that generate an autonomous driving message for controlling an actuator or the like provided in the vehicle 100 even without driver intervention.

At this time, the processor 830 selects some of the sensors provided in the vehicle 100 based on a mode to be executed, and generates an autonomous driving message using the selected sensors in a restrictive manner. Since a sensor to be activated is varied according to a mode to be executed, the resources (in particular, the battery) of the vehicle 100 may be efficiently used.

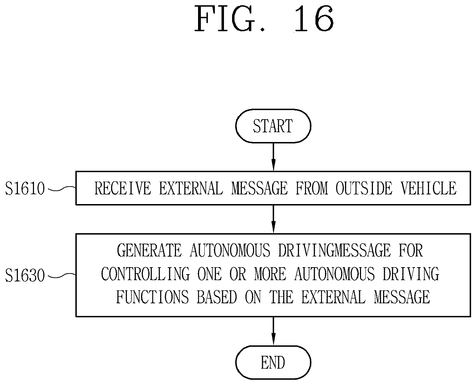

FIG. 16 is a flowchart for explaining a control method of a vehicle control device for adding a new mode or editing an existing mode.

The vehicle 100 and/or the vehicle control device 800 may further include a memory for storing the first mode and the second mode.

The processor 830 may receive information from a preset server (S1610).

The developers or manufacturers of the vehicle control device 800 may register a special autonomous driving mode suitable for a special environment and an application for executing the special autonomous driving mode with the server.

For example, various special autonomous driving modes such as an "autonomous driving mode for highway rainfall" suitable for highway in the rain, a "draft autonomous driving mode" for performing a draft whenever a user command is received, a "specific region autonomous driving mode" specialized for a specific region, and the like may be registered with the server.

The vehicle control device 800 may download and install at least one special autonomous mode registered with the server in response to a user request. When a new third mode is downloaded while the first mode and the second mode are stored in the memory, the processor 830 may execute any one of the first through third modes, and generate an autonomous driving message selectively using senses corresponding thereto.

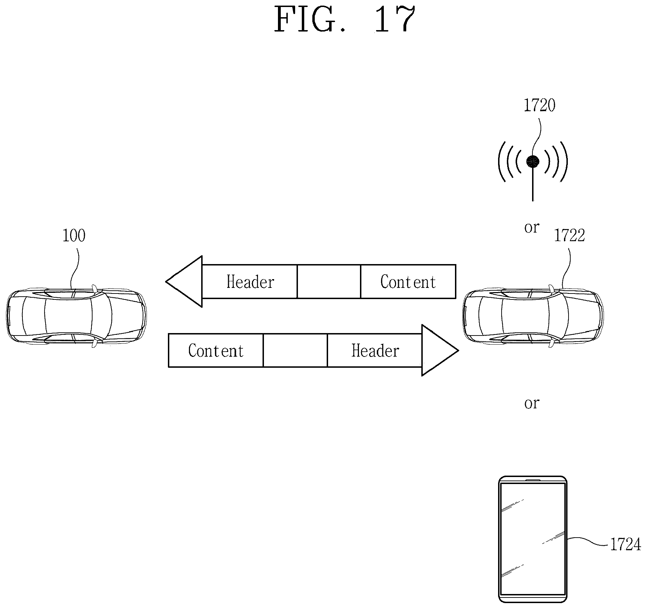

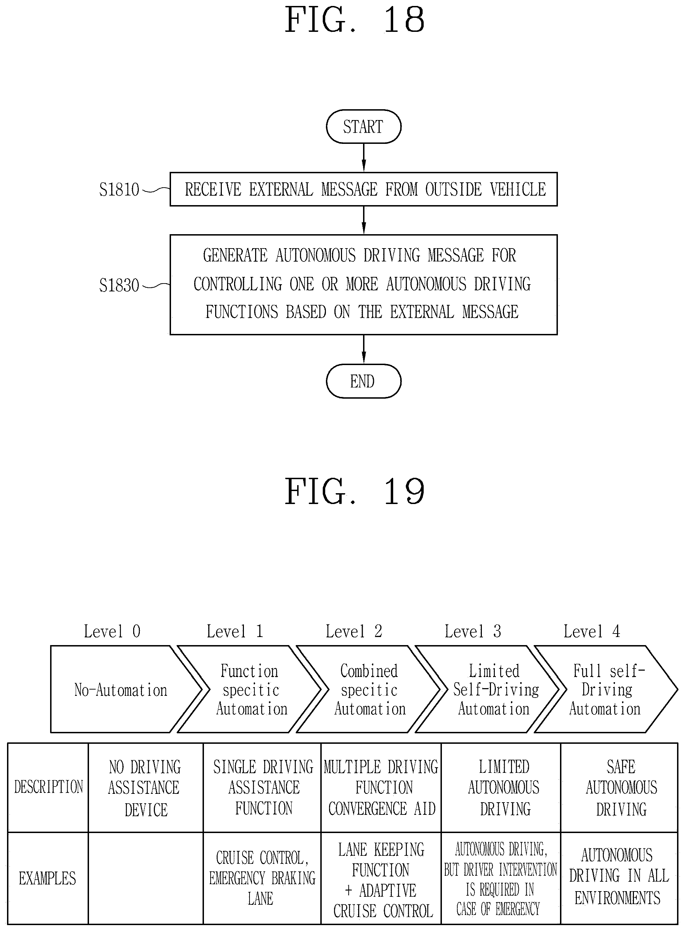

FIG. 17 is a conceptual view for explaining an autonomous driving system including an autonomous driving device, and FIG. 18 is a flowchart for explaining an operation of an autonomous driving device in the autonomous driving system of FIG. 17.

According to the present disclosure, an autonomous driving system including the autonomous driving device 800 is provided. The autonomous driving system additionally includes an external device for transmitting an external message.

The processor 830 receives an external message from outside the vehicle 100 (S1810).

The processor 830 may receive the external message through the communication device 400 provided in the vehicle 100 and/or the communication unit 810 included in the vehicle control unit 800.

The external message is defined as a "message received from a device located outside the vehicle 100", and there is no restriction on the type of the device that transmits the external message. For example, as illustrated in FIG. 17, an external message may be transmitted from at least one of an infrastructure 1720 through vehicle-to-infrastructure communication (V2l), another vehicle 1722 through vehicle-to-vehicle communication (V2V), and a terminal 1724 through vehicle-to-pedestrian communication (V2P).

The infrastructure 1720 includes a communication device that is fixed at a specific location, such as a base station or a server.

The external message may include various information. For example, weather information, road information, traffic information, infrastructure information, accident information, communication intensity information, and the like for a specific area may be received as an external message.

The external message may be composed of a header and contents. The header stores indicator information that identifies information capable of being recognized by the vehicle 100 or the vehicle control device 800 capable of performing autonomous driving. The contents store various information transferred to the vehicle 100 or the vehicle control device 800.

The header is configured to recognize only the vehicle 100 or the vehicle control device 800 capable of autonomous driving, and performs the role of a locking device that performs a function of locking the contents such that the contents cannot be checked by a non-autonomous device. Alternatively, the header may perform a key function of unlocking the contents such that the vehicle control device 800 can check the contents.

Next, the processor 830 generates an autonomous driving message for controlling one or more autonomous driving functions based on the external message (S1830).

For example, the processor 830 may select any one of a plurality of autonomous driving levels based on the external message, and generate an autonomous driving message for at least one of the devices to perform autonomous driving corresponding to the selected level in the vehicle.

FIG. 19 illustrates an embodiment of autonomous driving levels.

The processor 830 selects any one of the autonomous driving levels based on an external message received from an infrastructure such as a server located outside the vehicle 100 as well as information received from various devices disposed inside the vehicle 100.

For example, the 0th level is defined as a state in which basic information capable of performing autonomous driving is not generated from an electronic unit in the vehicle 100, or a state in which there is no electrical unit, and no function related to autonomous driving is executed. When the 0th level is selected, the vehicle control device 800 does not execute an autonomous driving function even when an autonomous driving command is received from the user.

The first level is defined as a situation in which autonomous driving can be carried out based on information generated from an electronic unit installed in the vehicle 100 to execute a cruise control function in which the speed is controlled by the vehicle control device 800, an emergency braking function in which the brake is operated by the vehicle control device 800, a lane keeping function in which the driving direction of the vehicle is changed by the vehicle control device 800. When the first level is selected, the vehicle control device 800 may execute only functions allowed in the first level, and may restrict the execution of a function not allowed in the first level or turn off the function itself.

The second level is the next level of the first level as an autonomous driving level at which more kinds of functions than the first level can be executed. In addition to the functions that can be executed at the first level at the second level, functions that cannot be executed at the first level but can be executed at the second level may additionally be executed. For example, an adaptive cruise control function that autonomously performs deceleration and acceleration by adjusting a distance from the preceding vehicle is not executed at the first level but can be executed at the second level.

The autonomous driving level that is selectable by the processor 830 may not be restricted to the embodiment illustrated in FIG. 19, and the processor 830 may select various autonomous driving levels.

The processor 830 may select any one of the plurality of autonomous driving levels and control the vehicle 100 to perform autonomous driving at the selected autonomous driving level.

A function controlled by the processor 830 may be changed according to the selected level. For example, when changed to the first level while executing the first function and the second function at the second level, the processor 830 maintains the execution of the first function, but ends the execution of the second function. In other words, the type of functions executed by the processor 830 may vary depending on the autonomous driving level to be executed.

Furthermore, depending on the autonomous driving level, the types of devices that are turned on or off among the devices provided in the vehicle 100 may be changed. As autonomous driving corresponding to the selected level is performed, the types of sensors used by the processor to generate an autonomous driving message may be varied.

When the first level is selected in a state where the plurality of autonomous driving levels include the first level for generating an autonomous driving message using sensors included in the first group, the processor 830 controls the communication unit 810 to turn off at least one sensor not included in the communication unit 810. It is to increase the efficiency of battery usage by turning off the sensors that will not be used.

The processor 830 may select one or more autonomous driving functions based on the external message, and activate the selected autonomous driving functions. Here, activation denotes a state in which the function is executed when a condition set in an autonomous driving function is satisfied, and the function is not executed when the condition is not satisfied.

The processor 830 may deactivate the one or more autonomous driving functions not to execute the one or more autonomous driving functions based on the external message.

Deactivation means a state in which the function is not executed even when a condition set in an autonomous driving function is satisfied. It may be defined as a state in which the function itself is off. In this case, the function is not executed even when the user attempts to execute the function by artificial means.

The one or more autonomous driving functions to be activated or deactivated vary according to the selected level.

The processor 830 controls the communication unit 810 to turn off a device corresponding to the one or more autonomous driving functions as the one or more autonomous driving functions are deactivated.

When a new external message is received while driving at any one autonomous driving level, the processor 830 may change the any one autonomous driving level to another one of a plurality of autonomous driving levels based on the new external message.

Meanwhile, the processor 830 may change the priorities of the plurality of sensors provided in the vehicle 100 by executing any one of the autonomous driving levels.

The vehicle control device 800 may receive vehicle driving information from the sensors provided in the vehicle 100 using CAN communication. In case of CAN communication, each device included in the hardware area may have a unique message. The processor 830 may change the priorities of the sensors by reassigning a message ID assigned to each of the sensors.

For example, in the case of an activated sensor, message IDs may be reassigned to have a smaller number than a message ID set in the deactivated sensor. The sensors and the vehicle control device 800 may exchange autonomous driving messages while performing communication based on the reassigned message ID.

The processor 830 may restrict or activate some functions of the vehicle in response to an external message. For example, when an external message indicating that it rains or snows over a predetermined section, LCA (lane change assist) for supporting lane change may be deactivated and FCW (forward collision warning) for preventing a forward collision may be activated. For another example, in performing autonomous driving by combining V2X information and sensing information, the V2X information received from the outside may be preferentially used when the communication signal strength is greater than a reference value, and the sensing information may be preferentially used instead of the V2X information when the communication signal intensity is less than the reference value.

As described above, the processor 830 of the vehicle control device 800 according to the present disclosure may change an autonomous driving level in response to an external message, and activate/deactivate one or more autonomous driving functions selected based on the external message. Accordingly, autonomous driving optimized for an external situation may be carried out, and the occurrence of an accident due to the execution of an invalid autonomous driving function may be prevented in advance.

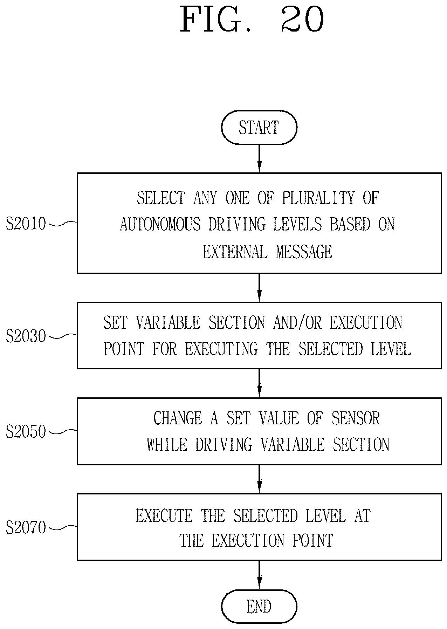

FIG. 20 is a flowchart for explaining a method of setting a variable section in response to an external message.

The processor 830 selects any one of a plurality of autonomous driving levels based on an external message (S2010). An autonomous drive function activated/deactivated according to the selected level is varied.

Next, the processor 830 sets a variable section and/or an execution point for executing the selected level (S2030).

When another level is selected while driving at any one level, the processor 830 sets a variable section or an execution point for changing to another level.

For example, a second level may be selected by an external message while driving at a first level. At this time, the processor 830 may determine an execution point to execute a second level (or change to the second level) without immediately changing the first level to the second level. The variable section is set to a route from the current position of the vehicle 100 to the execution point.

The execution point and/or the variable section may vary according to at least one of the external message and the speed of the vehicle.

For example, in the case of changing from the fourth level to the first level according to an external message, since there are many functions to be changed, all the functions are changed and then a point capable of driving at the first level is searched for an execution point. At this time, since the moving distance varies depending on the speed of the vehicle, the execution point may vary depending on the speed of the vehicle 100.

Although not shown in the drawings, the processor 830 may control the communication unit 810 to display guide information for guiding the one or more autonomous driving functions to be controlled based on the external message in at least one of visual, auditory, and tactile manners.

The processor 830 may determine a predetermined section in which the one or more autonomous driving functions should be controlled based on the external message, and execute the one or more autonomous driving functions while the vehicle is located in the predetermined section (or variable section).

The guide information may include predetermined section guide information for guiding the predetermined section. For example, information on at least one of a current autonomous driving level currently being executed, a future autonomous driving level to be changed in the future, an execution point at which a future autonomous driving level is to be executed, and a variable section may be included in the guide information.

Next, the processor 830 changes the set values of at least one device (or sensor) provided in the vehicle 100 while driving the variable section (S2050).

The processor 830 controls the communication unit 810 to change the set values of at least one of the devices provided in the vehicle 100 while the vehicle 100 is driving in the variable section.

For an example, a sensing range of the sensor may vary according to the autonomous driving level. A low level sensing is carried out at the first level, but a set value may be changed to perform sensing at a higher level than the first level at the fourth level. It is to efficiently use the battery.

For another example, the vehicle-to-vehicle distance should be maintained at least 3 m at the first level and at least 50 cm at the fourth level. When the vehicle 100 is suddenly changed to the first level while driving at a distance of 50 cm with respect to the preceding vehicle at the fourth level, the vehicle 100 must perform rapid deceleration. Since the rapid deceleration causes inconvenience to the passengers, the processor 830 may set a variable section for changing to the first level and execute an operation to be executed at the first level in advance within the variable section. In other words, the deceleration may be slowly performed until reaching an execution point at which the first level is to be executed to increase the distance with respect to the preceding vehicle from 50 cm to 3 m.

In the variable section, the processor 830 may perform test on whether sensing is carried out at the changed set value. If the test fails, the level change at the execution point is not made. In other words, when the test fails, the change of the autonomous driving level is restricted.

On the contrary, when the test is successful for all devices that have changed the set value, the processor 830 may execute the selected level at the execution point (S2070).

The autonomous driving level is changed in response to an external message, but since the variation of the level change is alleviated through the variable section, the ride quality of passengers may be increased.

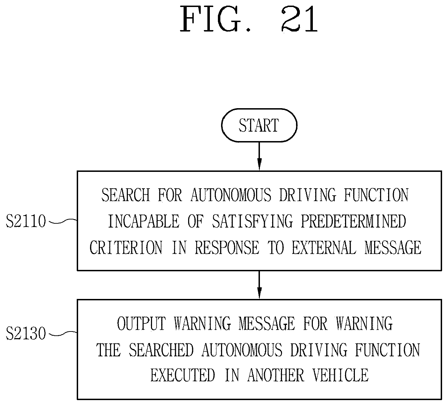

FIG. 21 is a flowchart for explaining a method of outputting a warning message in response to an external message.

Referring to FIG. 21, the processor 830 may search an autonomous driving function that fails to meet a predetermined criterion in response to an external message (S2110).

At this time, the processor 830 may search for at least one autonomous driving function that does not meet the predetermined criterion among the plurality of autonomous driving functions based on vehicle driving information received through the communication unit 810.

Next, the processor 830 may output or broadcast a warning message for warning that the searched autonomous driving function is not executed in another vehicle to the outside of the vehicle 100 (S2130).

The processor 830 may determine a predetermined section for restricting the execution of the searched autonomous driving function based on the vehicle driving information, and allow predetermined section information corresponding to the predetermined section to be included in the warning message so as not to execute the searched autonomous driving function in the another vehicle.

The warning message may include at least one of a generation time at which the warning message is generated, a valid time at which the warning message is valid, and an expiration time at which the validity of the warning message expires.

The risk of an accident that may be caused by another vehicle may be reduced by a warning message.

On the other hand, the present disclosure may be extended to the vehicle 100 having the vehicle control device 800 described with reference to FIGS. 8 through 21.

The foregoing present disclosure may be implemented as codes (application or software) readable by a computer on a medium written by the program. The control method of the above-described autonomous vehicle may be implemented by codes stored in a memory or the like.

The computer-readable media may include all kinds of recording devices in which data readable by a computer system is stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may include a processor or controller. Accordingly, the detailed description thereof should not be construed as restrictive in all aspects but considered as illustrative. The scope of the disclosure should be determined by reasonable interpretation of the appended claims and all changes that come within the equivalent scope of the disclosure are included in the scope of the disclosure.

## Claims

1. A vehicle control device (800) for a vehicle (100), the vehicle control device (800) comprising:
a communication unit (810) configured to communicate with at least one of the plurality of devices of the vehicle (100); and
at least one processor (830) configured to:
based on an external message received from an external device outside of the vehicle (100), generate an autonomous driving message configured to control at least one autonomous driving function of the vehicle (100), and
transmit the autonomous driving message to at least one of the plurality of devices included in the vehicle (100), the plurality of devices being configured to perform the at least one autonomous driving function of the vehicle (100).

2. The vehicle control device (800) of claim 1, wherein the at least one processor (830) is further configured to:
select an autonomous driving level among a plurality of autonomous driving levels based on the external message; and
generate the autonomous driving message to instruct the at least one of the plurality of devices to perform the at least one autonomous driving function corresponding to the selected autonomous driving level.

3. The vehicle control device (800) of claim 2, wherein the at least one autonomous driving function is configured to vary according to the selected autonomous driving level.

4. The vehicle control device (800) of claim 3, wherein the at least one processor (830) is further configured to:
in response to reception of a new external message during autonomous driving of the vehicle (100) at the selected autonomous driving level, determine another autonomous level among the plurality of autonomous driving levels based on the new external message;
set a transition range for changing the autonomous driving of the vehicle (100) from the selected autonomous driving level to another autonomous driving level; and
control the communication unit (810) to change a set value of at least one of the plurality of devices of the vehicle (100) corresponding to the transition range.

5. The vehicle control device (800) of claim 4, wherein the at least one processor (830) is further configured to determine the transition range according to at least one of the new external message or a speed of the vehicle (100).

6. The vehicle control device (800) of any one of claims 2 to 5, wherein the plurality of devices of the vehicle (100) include a plurality of types of sensors, and
wherein the at least one processor (830) are further configured to use information from different types of sensors among the plurality of types of sensors to generate messages to autonomously drive the vehicle (100) at different autonomous driving levels among the plurality of autonomous driving levels.

7. The vehicle control device (800) of any one of claims 2 to 6, wherein the at least one processor (830) is further configured to, based on reception of the external message, deactivate the at least one autonomous driving function.

8. The vehicle control device (800) of any one of claims 2 to 7, wherein the at least one processor (830) is further configured to determine at least one priority level of the plurality of devices of the vehicle (100) based on the selected autonomous driving level.

9. The vehicle control device (800) of claim 8, wherein the at least one processor (830) is further configured to change the at least one priority level of the plurality of devices of the vehicle (100) by reassigning a message identification, ID, that has been assigned to each of the plurality of devices.

10. The vehicle control device (800) of any one of claims 2 to 9, wherein the at least one processor (830) is further configured to, based on reception of the external message, activate the at least one autonomous driving function to execute the at least one autonomous driving function.

11. The vehicle control device (800) of any one of claims 1 to 10, wherein the at least one processor is further configured to, based on the external message, control the communication unit (810) to display guide information that indicates the at least one autonomous driving function in at least one of visual, auditory, or tactile manners.

12. The vehicle control device (800) of claim 11, wherein the at least one processor (830) is further configured to:
determine a predetermined range in which the at least one autonomous driving function are controlled based on the external message; and
execute at least one autonomous driving function based on the vehicle (100) being located in the predetermined range,
wherein the guide information comprises predetermined information indicating the predetermined range.

13. The vehicle control device (800) of any one of claims 1 to 12, wherein the at least one processor (830) is further configured to:
receive vehicle driving information through the communication unit (810);
based on the vehicle driving information, search at least one autonomous driving function that does not satisfy a predetermined criterion; and
control the communication unit (810) to output a warning message indicating that the at least one autonomous driving function is not executed in another vehicle located outside of the vehicle (100).

14. The vehicle control device (800) of claim 13, wherein the at least one processor (830) is further configured to:
determine a predetermined range in which the at least one autonomous driving function is restricted based on the vehicle driving information; and
include, in the warning message, predetermined information corresponding to the predetermined range to cause another vehicle to not execute the at least one autonomous driving function.

15. The vehicle control device (800) of claim 14, wherein the warning message comprises at least one of a generation time at which the warning message is generated, a valid period for which the warning message is valid, or an expiration time at which validity of the warning message expires.
